# EUROPEAN PATENT APPLICATION

(11) **EP 4 510 067 A1**
(43) Date of publication of application: **19.02.2025**
(21) Application number: 24185870.3
(22) Date of filing: 02.07.2024
(51) Int. Cl.: G06Q 30/0601

(54) **PERSONAL INFORMATION TRANSACTION SYSTEM AND OPERATING METHOD OF ELECTRONIC DEVICE INCLUDED IN THE SYSTEM**

(30) Priority: 17.08.2023 KR 20230107569
(71) Applicant: SNPLAB INC., Seoul 06781 (KR)
(72) Inventor: JEONG, Changki, 06781 Seoul (KR); HAN, Sojeong, 06781 Seoul (KR)
(74) Representative: Zimmermann, Tankred Klaus

(57) **Abstract**

A personal information transaction system is disclosed. The personal information transaction system includes a transaction management server configured to store a purchase suggestion for a target personal information product, a personal information management server configured to store personal information of a user, and a user terminal configured to receive the purchase suggestion, to request the personal information management server to transmit target personal information associated with the purchase suggestion, to receive the target personal information from the personal information management server, and to transmit the received target personal information.

## Description

### [Technical Field]

Embodiments of the present disclosure relate to a personal information transaction system and an operating method of an electronic device included in the system.

### [Background Art]

Personal information of a user is information capable of identifying the user, and is required to be stored not to be revealed to others. On the other hand, the personal information may be used as an important indicator representing tendencies (consumption tendencies or the like) of the user.

In most cases, personal information of a user is generated and accumulated as the user uses a specific service. Accordingly, in the past, the personal information of the user was mainly managed by a company that provides the service, and individuals had no special awareness of storage or utilization of their personal information. However, recently, MyData services, in which individuals being information subjects actively control their own information, are increasingly expanding. In addition, there are attempts by individuals to create profits by selling or renting their personal information under their control.

However, when each individual becomes a subject and sells or rents his or her personal information, since the personal information of each individual is scattered and not categorized, it is inconvenient for a purchaser of the personal information to make transactions and classify the personal information for each individual.

When a service provider that manages personal information transmits personal information of a plurality of users to a purchaser, there is an advantage that categorized personal information can be transmitted, but 'third party transmission' occurs in which the personal information is transmitted to a third party other than a user, resulting in an inconvenience that many legal obligations and responsibilities for management and supervision of the service provider are strengthened.

The contents described in the Background Art are to help the understanding of the background of the disclosure, and may include contents that are not a disclosed conventional technology.

### [Disclosure]

### [Technical Problem]

An object of the present disclosure is to provide a personal information transaction system that can trade personal information of a user without fear of the personal information of the user being revealed and an operating method of an electronic device included in the system.

### [Technical Solution]

A personal information transaction system according to embodiments of the present disclosure includes: a transaction management server configured to store a purchase suggestion for a target personal information product; a personal information management server configured to store personal information of a user; and a user terminal configured to receive the purchase suggestion, to request the personal information management server to transmit target personal information associated with the purchase suggestion, to receive the target personal information from the personal information management server, and to transmit the received target personal information.

An operating method of an electronic device for making a personal information transaction according to embodiments of the present disclosure includes: receiving a purchase suggestion for a target personal information product; requesting a personal information management server to transmit target personal information associated with the purchase suggestion; receiving the target personal information from the personal information management server and storing the received target personal information in the electronic device; and transmitting the stored target personal information to the personal information management server and a storage of another purchaser.

The operating method of an electronic device for making a personal information transaction according to embodiments of the present disclosure is stored in a computer-readable storage medium.

### [Advantageous Effects]

According to embodiments of the present disclosure, a personal information seller provides a sales list of personal information of a plurality of users managed by the personal information seller, and a personal information purchaser makes a purchase suggestion for the personal information in such a sales list, thereby obtaining an effect capable of purchasing a large amount of high-quality and standardized data.

According to embodiments of the present disclosure, since personal information is directly transmitted from a personal information user to a personal information purchaser, a personal information seller other than the user transmits no personal information to the personal information purchaser, thereby causing no third party transmission of personal information.

### [Description of Drawings]

FIG. 1 is a diagram for explaining a personal information transaction method according to embodiments of the present disclosure.
FIG. 2 illustrates a personal information transaction system according to embodiments of the present disclosure.
FIG. 3 illustrates electronic devices according to embodiments of the present disclosure.
FIG. 4 illustrates a user terminal according to embodiments of the present disclosure.
FIG. 5 is a diagram for explaining an operation of a personal information transaction system according to embodiments of the present disclosure.
FIG. 6 is a diagram for explaining an operation of a user terminal according to embodiments of the present disclosure.
FIG. 7 is a diagram for explaining an operation of a personal information transaction system according to embodiments of the present disclosure.
FIG. 8 is a diagram for explaining an operation of a personal information transaction system according to embodiments of the present disclosure.

### [Mode for Invention]

Hereinafter, preferred embodiments of the present disclosure are described in detail with reference to the accompanying drawings.

Embodiments are provided to more fully explain the present disclosure to a person having ordinary knowledge in the art to which the present disclosure pertains. The following embodiments may be modified in various other forms, and the scope of the present disclosure is not limited to the following embodiments. Rather, these embodiments are provided to make the present disclosure more thorough and complete and to fully convey the spirit of the present disclosure.

Terms used in the present specification are used to describe a specific embodiment, and are not intended to limit the present disclosure. Furthermore, in the present specification, an expression of the singular number may include an expression of the plural number unless clearly defined otherwise in the context.

In the description of the embodiments, when it is described that each layer (film), area, pattern, or structure is formed "on" or "under" each substrate, layer (film), area, pad, or pattern, this includes both expressions, including that a layer is formed on another layer "directly" or "with a third layer interposed between the two layers (indirectly)". Furthermore, a criterion for the term "on or under of each layer" is described based on the drawings.

The drawings are merely for enabling the spirit of the present disclosure to be understood, and it should not be interpreted that the scope of the present disclosure is limited by the drawings. Furthermore, in the drawings, a relative thickness or length or a relative size may be enlarged for convenience and the clarity of description.

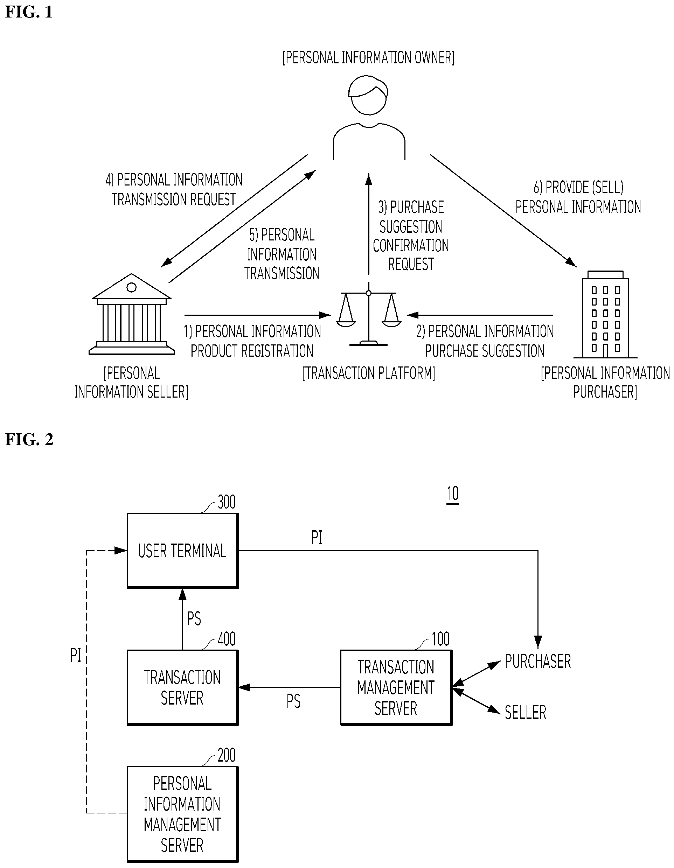

FIG. 1 is a diagram for explaining a personal information transaction method according to embodiments of the present disclosure. Referring to FIG. 1, a personal information seller, a personal information purchaser, and a user, who is a personal information owner, participate in personal information transactions according to embodiments of the present disclosure.

A personal information transaction according to embodiments of the present disclosure is a transaction led by a personal information seller. Normally, a personal information transaction is made in such a way that a user, who owns personal information, directly sells his/her personal information. Such a method has the problem that s personal information purchaser is not able to obtain high-quality and standardized data and it takes a considerable amount of resources to directly contact individual users.

On the other hand, according to embodiments of the present disclosure, a personal information seller provides a sales list of personal information of a plurality of users managed by the personal information seller, and a personal information purchaser makes a purchase suggestion for the personal information in such a sales list, thereby obtaining an effect capable of purchasing a large amount of high-quality and standardized data. For example, the personal information seller may be a service provider that provides a specific service, and a personal information user may be a user who uses the service provider. The personal information seller may attempt to sell personal information related to a user's use of the service.

In addition, according to embodiments of the present disclosure, since personal information is directly transmitted from the personal information user to the personal information purchaser, the personal information seller other than the user does not transmit the personal information to the personal information purchaser, thereby causing no third party transmission of personal information.

In the present specification, personal information refers to a set of information related to users, and may include information that can identify users and information on user's specific activities. In such a case, a user identified by personal information is referred to as an owner of the personal information.

The personal information transaction illustrated in FIG. 1 is described as follows.
1) A personal information seller registers personal information products to be sold on a trading platform. The personal information product may include personal information of at least one user.
2) A personal information purchaser selects a personal information product to be purchased from the registered personal information products. In such a case, the personal information purchaser may select at least some personal information from the personal information products. In such a case, filter information for specifying the personal information may be provided.
   Depending on embodiments, the filter information may include owner information indicating characteristics of an owner of the personal information such as the age, residence, and gender of the owner. The filter information may further include attribute information related to the type and scope of the personal information. For example, the owner information may be information indicating that the owner (user) of the personal information is in his 30s, lives in Busan, and is male. For example, the attribute information may be information indicating that the personal information has an annual stock trading amount of 100 million won or more.
3) The trading platform may transmit purchase suggestions to users related to the personal information product selected by the purchaser. In such a case, the purchase suggestion may be transmitted along with information on the personal information product and the filter information.
4) When the user agrees to the purchase suggestion and wants to sell personal information, the user requests the seller, who manages personal information of the seller, to transmit the personal information of the user.
5) The personal information seller transmits the personal information to the user.
6) The user, who is the owner of the personal information, provides the personal information to be sold to the personal information purchaser. Accordingly, the personal information transaction is completed.

When a third party other than a user wants to transmit personal information of the user to a person other than the user, the third party needs to take great responsibility and exert effort in managing and protecting the personal information of the user. As described above, in accordance with personal information transactions according to embodiments of the present disclosure, when the personal information of the user is transmitted (1) by the user or (2) by the third party, the user directly transmits the personal information. Accordingly, there is no need for a seller or an intermediary to transmit personal information to a purchaser on behalf of the user, which has the effect of reducing responsibility and effort.

FIG. 2 illustrates a personal information transaction system 10 according to embodiments of the present disclosure. Referring to FIG. 2, the personal information transaction system 10 may include a transaction management server 100, a personal information management server 200, a user terminal 300, and a transaction server 400.

The transaction management server 100 is a server operated to trade personal information products, and may be used by purchasers who want to purchase the personal information products and sellers who want to sell the personal information products.

Depending on embodiments, the transaction management server 100 may issue accounts for the seller and the purchaser, and provide functions necessary for transactions to the seller and the purchaser in response to login information for the accounts.

The personal information management server 200 may store personal information PI constituting personal information products. Depending on embodiments, the personal information management server 200 may be a server operated by a seller who wants to sell the personal information products, but is not limited thereto.

The user terminal 300 is a terminal of a user who is the owner of the personal information PI. The user terminal 300 may receive the personal information PI from the personal information management server 200, and transmit the personal information PI to a storage of a purchaser. The storage of the purchaser may be a device different from the personal information management server 200.

The transaction server 400 is a device for managing transactions of personal information products, and may exchange data between the transaction management server 100 and the user terminal 300. The transaction server 400 may be linked to a storage space for storing the data. In such a case, the storage space may refer to a physical space itself, such as a memory included in the transaction server 400 or a database located outside the transaction server 400, and also refer to a cloud storage provided by at least one external server and a virtual space such as a blockchain.

Depending on embodiments, the transaction server 400 may be constructed separately from the transaction management server 100, or may be integrated with the transaction management server 100. In such a case, the functions or operations of the transaction server 400 are understood to be performed by the transaction management server 100.

The electronic devices 100, 200, and 300 are devices having arithmetic processing functions and communication functions, and may include a processor and a communication circuit.

The transaction management server 100 may generate a product sales list including information on personal information products to be sold, on the basis of an input from the seller. The transaction management server 100 may provide the product sales list to purchasers. The purchaser selects personal information products to be purchased by referring to the product sales list. In such a case, the purchaser may specify desired owner's attributes and/or the type and scope of personal information.

The transaction management server 100 may transmit a purchase suggestion PS to the transaction server 400 in response to an input of the purchaser. Depending on embodiments, the purchaser accesses a transaction page managed by the transaction management server 100 by using his or her terminal (that is, a purchaser terminal), and selects a personal information product that the purchaser wants to purchase through a transaction page. An input related to the selection of the purchaser terminal may be transmitted to the transaction management server 100, and the transaction management server 100 may generate the purchase suggestion PS of the purchaser on the basis the transmitted input and transmit the purchase suggestion PS to the transaction server 400.

The purchase suggestion PS may include information indicating a personal information product (for example, target personal information product) selected by the purchaser, the characteristics of an owner, and the type and scope of personal information. Depending on embodiments, the purchase suggestion PS may include a service ID for identifying a personal information product, target owner information indicating the characteristics of an owner, and target attribute information indicating the type and scope of personal information.

However, the purchase suggestion PS includes no information on the personal information PI itself. For example, the purchase suggestion PS may include no information necessary for specifying the owner of the personal information PI.

The transaction server 400 may receive the purchase suggestion PS transmitted from the transaction management server 100, and store information related to the purchase suggestion PS in a storage space.

The transaction server 400 may transmit the purchase suggestion PS to the user terminal 300. Depending on embodiments, the transaction server 400 may transmit the purchase suggestion PS to the user terminal 300 in response to a purchase suggestion providing request to the user terminal 300.

In the present specification, the purchase suggestion PS transmitted from the transaction server 400 to the user terminal 300 and the purchase suggestion PS transmitted from the transaction management server 100 are described as being the same; however, depending on embodiments, even though the two purchases suggestions PS are different in the form or structure of specific data, when the two purchases suggestions PS include information on a personal information product desired by the purchaser, the two purchases suggestions PS may be treated as being substantially the same.

The user terminal 300 may transmit personal information PI (for example, may be referred to as target personal information) associated with the purchase suggestion PS to the storage of the purchaser in response to the purchase suggestion PS. Depending on embodiments, the user terminal 300 may receive personal information PI associated with the purchase suggestion PS from the personal information management server 200, and transmit the personal information PI to the storage of the purchaser.

On the other hand, information on the storage of the purchaser may be registered in advance in the transaction management server 100, and the user terminal 300 may receive information (for example, address) for accessing the storage of the purchaser from the transaction management server 100.

The user terminal 300 may receive the personal information PI from the personal information management server 200. For example, the user terminal 300 may request the personal information management server 200 to transmit the personal information PI, and receive the personal information PI associated with the request from the personal information management server 200. When the request is received, the personal information management server 200 may read personal information PI associated with the request of the user terminal 300 from the stored personal information, and transmit the read personal information PI.

Alternatively, when personal information PI to be transmitted is stored in the user terminal 300, a request to the personal information management server 200 may be omitted, and the user terminal 300 may transmit the stored personal information PI to the storage of the purchaser.

Once the personal information PI is transmitted to the purchaser, the personal information transaction may be completed.

The personal information PI provided to the purchaser is personal information to be finally sold, and may be personal information that falls within the scope of the purchase suggestion PS. Depending on embodiments, the user terminal 300 may determine the type and scope of personal information PI to be sold. For example, on the basis of a purchase suggestion PS or an input of a user, the user terminal 300 may determine the type and scope of personal information PI to be sold.

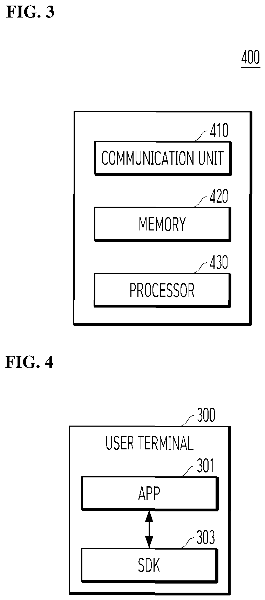

FIG. 3 illustrates electronic devices according to embodiments of the present disclosure. Referring to FIG. 3, an electronic device 500 may refer to the electronic devices 100, 200, 300, and 400 described with reference to FIG. 1.

The electronic device 500 is a device that has an arithmetic processing function and is capable of data communication with the outside, and may be, for example, a server, a smartphone, a notebook, a computer, a wearable device, and the like; however, embodiments of the present disclosure are not limited thereto. The electronic device 500 may include a communication unit 510, a memory 520, and a processor 530.

The communication unit 510 may exchange data with an external device. Depending on embodiments, the communication unit 510 may exchange data according to a wired communication protocol or a wireless communication protocol.

The memory 520 may store data necessary for an operation of the electronic device 500. Depending on embodiments, the memory 520 may store a program (that is, a personal information management application) including a plurality of instructions for performing various operations performed by the electronic device 500. The memory 520 may also store data transmitted from the outside or to be transmitted to the outside.

The processor 530 may control the overall operation of the electronic device 500. Depending on embodiments, the processor 530 may have an arithmetic processing function, execute an application stored in the memory 520, and perform a plurality of operations according to instructions included in the application. For example, the processor 530 may perform the plurality of operations by controlling the communication unit 510 and the memory 520.

Depending on embodiments, some functions of the processor 530 may be implemented separately and additionally or alternatively as a part of the communication unit 510 and/or the memory 520 of the electronic device 500.

FIG. 4 illustrates the user terminal 300 according to embodiments of the present disclosure. Referring to FIG. 4, the user terminal 300 may store and execute an application (APP) 301. The APP 301 is a program including a plurality of instructions, and may be executed by a processor included in the user terminal 300 to enable the user terminal 300 to perform a specific operation.

The APP 301 may manage and store user's personal information PI. Depending on embodiments, the APP 301 may be an application linked to the personal information management server 200 and operated under the management of a seller. For example, information related to an owner collected by the APP 301 may be transmitted to the personal information management server 200, and, conversely, the personal information PI stored in the personal information management server 200 may be received by the APP 301.

Depending on embodiments, the APP 301 may transmit a request to provide owner's personal information PI to the personal information management server 200, and receive the personal information PI from the personal information management server 200 and store the received personal information PI in the user terminal 300.

Alternatively, the APP 301 may generate owner's personal information PI and store the generated personal information PI in the user terminal 300. For example, the APP 301 may generate the personal information PI by using information on an owner (for example, login information) and information on activities of the owner (that is, the user terminal 300) under the execution of the APP 301; however, the present disclosure is not limited thereto.

The user terminal 300 may also store a software development kit (SDK) 303 that provides additional functions for the APP 301. The SDK 303 may enable the APP 301 to perform functions (or operations) supported by the SDK 303 in the execution environment of the APP 301.

The SDK 303 stored in the user terminal 300 may perform functions necessary for transactions of the personal information PI according to embodiments of the present disclosure, or may enable the APP 301 to perform the functions. For example, the SDK 303 may perform various operations in cooperation with the APP 301.

Accordingly, according to embodiments of the present disclosure, the SDK 303, which provides functions related to personal information transactions, may be provided to each user terminal 300 along with the APP 301, and the transaction management server 100 may make personal information transactions through the functions of the SDK 303.

When personal information sellers are different from one another, the characteristics of the personal information management server 200 or the characteristics of the APP 301 may vary. In such a case, since the transaction management server 100 needs to make personal information transactions to match the characteristics of the user terminal 300, that is, to match the characteristics (attributes) of each APP 301, complexity may increase. However, according to embodiments of the present disclosure, personal information can be traded through communication with the SDK 303 without the need to consider the characteristics of the APP 301 for each seller, thereby obtaining an effect of greatly reducing complexity.

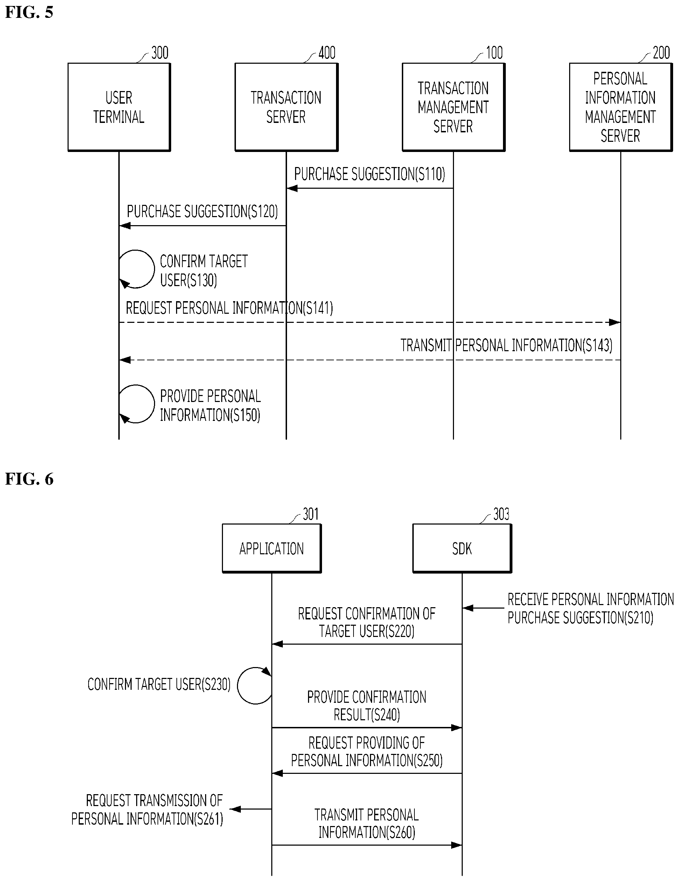

FIG. 5 is a diagram for explaining the operation of the personal information transaction system according to embodiments of the present disclosure. Referring to FIG. 5, the transaction management server 100 transmits a purchase suggestion to the transaction server 400 (S110). Depending on embodiments, the purchase suggestion may include filter information on personal information to be purchased.

The purchase suggestion may also include a target service ID (identification) for identifying personal information products to be purchased and an application ID for identifying the APP 301 installed on each user terminal 300. This will be described below.

The transaction server 400 transmits the purchase suggestion to the user terminal 300 (S120). Depending on embodiments, the user terminal 300 may first transmit a purchase suggestion request to the transaction server 400, and then the transaction server 400 may transmit the purchase suggestion to the user terminal 300. The purchase suggestion transmission request may be made through a user's operation, and the personal information management server 200 may transmit a guidance message guiding the purchase suggestion transmission request to the user terminal 300.

The user terminal 300 confirms whether a user is a target user associated with the purchase suggestion (S130). Depending on embodiments, the user terminal 300 may compare target owner information included in the purchase suggestion with information on the user of the user terminal 300, and determine whether the user of the user terminal 300 is a target user who satisfies the target owner information.

For example, in a case where the purchase suggestion represents a purchase suggestion of personal information for an owner 'in 30s' and 'female', when the user is 'in 30s' and 'female', the user terminal 300 may determine that the user is the target user. In such a case, information on the user has been stored in the user terminal 300; however, the present disclosure is not limited thereto and the information may be provided from the personal information management server 200.

When it is determined that the user is the target user, the user terminal 300 provides personal information of the user to a purchaser (S150). Depending on embodiments, the user terminal 300 may directly transmit the personal information to the transaction management server 100, or may transmit the personal information to a pre-designated space. The pre-designated space may be identified by information included in the purchase suggestion.

The user terminal 300 may provide personal information associated with attributes to the purchaser through the purchase suggestion. Depending on embodiments, the user terminal 300 may select personal information that matches attributes indicated by the purchase suggestion from the stored personal information, and provide the selected personal information to the purchaser. In such a case, the user terminal 300 may transmit the personal information to a storage of the purchaser, and the storage may be a storage registered in advance by the purchaser. Information on the address of the storage of the purchaser may be provided from the transaction management server 100.

On the other hand, when the personal information provided to the purchaser does not exist in the user terminal 300, the user terminal 300 may request the personal information management server 200 to transmit personal information (S141), and the personal information management server 200 may transmit the requested personal information to the user terminal 300 (S143). The personal information transmission request may include attribute information on the type and scope of personal information to be provided to the purchaser, and the personal information management server 200 may provide personal information that matches the attributes among the user's personal information to the user terminal 300.

As the purchaser receives the personal information PI, the personal information transaction is completed. Depending on embodiments, upon receiving the personal information PI, the purchaser may register the completion of the provision of the personal information PI in the transaction management server 100. After the completion of the transaction, the transaction management server 100 and the transaction server 400 may provide compensation for the personal information transaction to each participant.

FIG. 6 is a diagram for explaining the operation of the user terminal according to embodiments of the present disclosure. Referring to FIG. 6, the user terminal 300 stores and executes the APP 301 and the SDK 303. The user terminal 300 may make personal information transactions according to the operations of the APP 301 and the SDK 303.

The APP 301 and the SDK 303 may perform operations by exchanging commands or data with each other, or calling each other.

The SDK 303 may receive a personal information purchase suggestion (S210). Depending on embodiments, the SDK 303 may request transmission of a purchase suggestion through the transaction server 400, and receive a purchase suggestion from the transaction server 400 according to the request.

The SDK 303 may request the APP 301 to confirm a target user (S220). Depending on embodiments, the SDK 303 may transmit target owner information included in the purchase suggestion to the APP 301, and request target user confirmation.

The APP 301 may confirm whether the user of the user terminal 300 is the target user (S230). Depending on embodiments, the APP 301 may determine whether the user is the target user by comparing information on a user stored in the user terminal 300 with target owner information included in the purchase suggestion.

The APP 301 provides the target user confirmation result to the SDK 303 (S240). Depending on embodiments, the APP 301 may provide the SDK 303 with information regarding whether the user of the user terminal 300 is the target user.

When the user of the user terminal 300 is the target user, the SDK 303 requests the APP 301 to provide personal information (S250). Depending on embodiments, when the confirmation result transmitted from the APP 301 indicates that the user is the target user, the SDK 303 may request the APP 301 to provide personal information. In such a case, the SDK 303 may additionally transmit attribute information on the attributes of personal information to be requested.

Depending on embodiments, when the user of the user terminal 300 is the target user, the SDK 303 may display details (for example, attributes of personal information, scope of user, scope of use of personal information, purchase price, and the like) of the purchase suggestion to the user through the user terminal 300. Subsequently, in response to an input indicating user approval, the SDK 303 may request the APP 301 to provide personal information.

On the other hand, when the user of the user terminal 300 is not the target user, the SDK 303 may not request the APP 301 to transmit personal information and may not display data related to the purchase suggestion through the user terminal 300. When personal information purchase is transmitted, it may be treated as spam and inconvenience may occur. However, according to embodiments of the present disclosure, users who are not related to a purchase suggestion do not feel inconvenienced because details of the purchase suggestion are not transmitted.

The APP 301 transmits the personal information to the SDK 303 in response to the personal information providing request (S260). Depending on embodiments, the APP 301 may transmit target personal information associated with the purchase suggestion among the stored personal information to the SDK 303.

When the target personal information has not been stored in the user terminal 300 or is not the latest personal information, the APP 301 may request the personal information management server 200 to transmit the personal information.

In the present specification, the fact that the APP 301 transmits the personal information to the SDK 303 should be interpreted as including all operations, in which the APP 301 causes the SDK 303 to acquire (or read) personal information, such as transmitting the personal information itself from the APP 301 to the SDK 303, transmitting the storage address of the personal information, and transmitting access right to the personal information.

Subsequently, the SDK 303 provides the personal information to the transaction management server 100, so that the transaction may be completed.

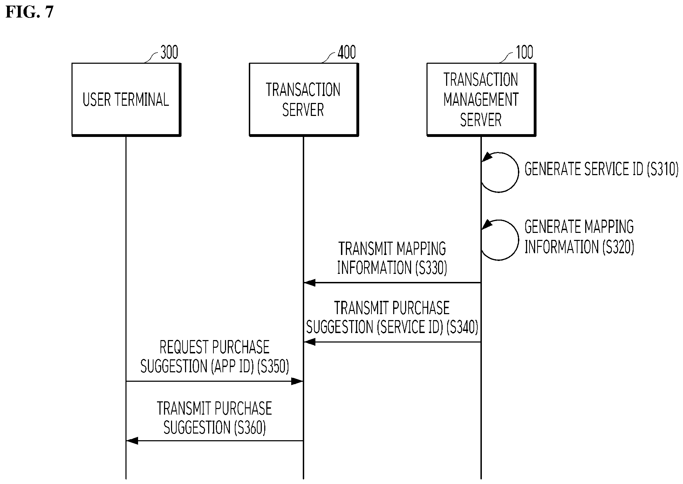

FIG. 7 is a diagram for explaining the operation of the personal information transaction system according to embodiments of the present disclosure. Referring to FIG. 7, the transaction management server 100 generates a service ID for a personal information transaction (S310).

The service ID is an identifier for identifying personal information products to be sold by a personal information seller. When a personal information product registration request for registering the personal information product to be sold by the seller is transmitted to the transaction management server 100, the transaction management server 100 registers the personal information product in response to the personal information product registration request and generates a service ID for identifying the registered personal information product. That is, the service ID serves as an identifier associated with the registered personal information product.

The transaction management server 100 may generate mapping information indicating the correspondence relationship between the service ID and the application ID of the APP 301 (S320). Depending on embodiments, the transaction management server 100 may map at least one application ID to each service ID and generate mapping information indicating the mapping relationship. That is, the mapping information is information indicating which application ID is mapped to each service ID.

The personal information products to be sold include personal information under specific conditions (or specific ranges).

On the other hand, the scope of personal information to be collected and generated varies depending on the APP 301 executed on the user terminal 300, so as a result, the personal information included in the personal information product may be associated with the APP 301 and as a result, the APP 301 may be associated with each personal information product. For example, since a personal information product related to stock trading of a man in his 30s includes personal information of the user who uses a stock application, the personal information product may be related to the stock application.

Accordingly, according to embodiments of the present disclosure, the transaction management server 100 maps (or associates) the service ID indicating the personal information product and the application ID, which is an identifier for identifying the APP 301 installed on the user terminal 300, to each other, and generates mapping information.

The transaction management server 100 may transmit the generated mapping information to the transaction server 400 (S330). Depending on embodiments, the transaction management server 100 may transmit mapping information including information on a plurality of service IDs and an application ID associated with each of the plurality of service IDs to the transaction server 400.

Depending on embodiments, the transaction server 400 may generate a mapping table by using the transmitted mapping information, and store the generated mapping table. The mapping table may include information on each service ID and an application ID associated with each service ID.

Subsequently, the transaction management server 100 may transmit a purchase suggestion including the service ID to the transaction server 400 (S340). Depending on embodiments, the transaction server 400 may store the service ID transmitted from the transaction management server 100. That is, the transaction server 400 may store service IDs associated with personal information products that purchasers have actually requested to purchase.

In order to confirm the purchase suggestion, the user terminal 300 may request the transaction server 400 to transmit the purchase suggestion including the application ID (S350). Depending on embodiments, the SDK 303 of the user terminal 300 may transmit a purchase suggestion transmission request including the application ID to the transaction server 400 by using the application ID.

Depending on embodiments, before the request of the purchase suggestion, the user terminal 300 may perform a procedure of registering the application ID in the SDK 303. For example, when the user terminal 300 first calls (or executes) the SDK 303 through the APP 301, the user terminal 300 transmits the application ID to the SDK 303 as a factor, so that the SDK 303 may store and use the application ID.

As the application ID is registered in the SDK 303, the SDK 303 may have access right to the application ID stored in the user terminal 300, or the SDK 303 may be modified to include the application ID in instructions for performing the operation of the SDK 303; however, but the present disclosure is not limited thereto and includes the SDK 303 being in a state in which the application ID may be used.

Such an application ID may have been stored in the user terminal 300 in advance, or may be transmitted from the outside and stored in the user terminal 300.

In response to a request from the user terminal 300, the transaction server 400 may transmit a purchase suggestion associated with the user terminal 300 to the user terminal 300 (S360). Depending on embodiments, the transaction server 400 may receive an application ID from the user terminal 300, and determine a purchase suggestion associated with the user terminal 300 on the basis of mapping information and the application ID. For example, by using mapping information (or mapping table) including information on a service ID and an application ID associated with the service ID, the transaction server 400 may determine a service ID associated with an application ID transmitted from the user terminal 300, determine a target purchase suggestion associated with the service ID determined among transmitted purchase suggestions, and transmit the determined target purchase suggestion to the user terminal 300.

Subsequently, the user terminal 300 may receive the purchase suggestion and then perform the methods described with reference to FIG. 6, thereby selling (or providing) personal information.

As described above, according to embodiments of the present disclosure, the correspondence relationship between a service ID associated with each personal information product and an application ID associated with the APP 301 executed on each user terminal 300 is used, thereby providing an effect capable of selectively providing only a purchase suggestion suitable for the user terminal 300 (that is, an owner).

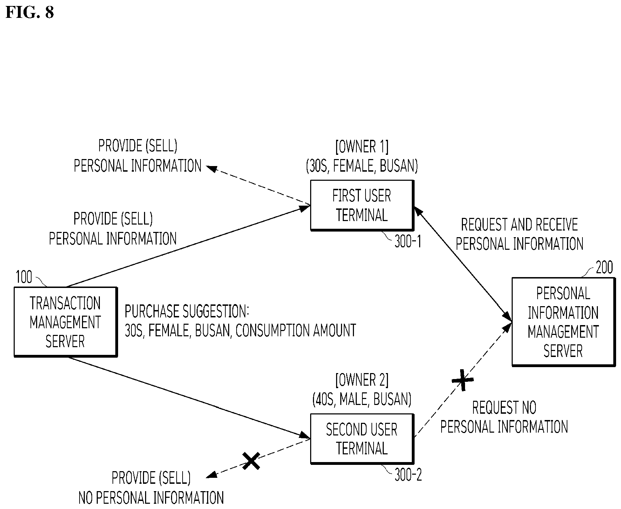

FIG. 8 is a diagram for explaining the operation of the personal information transaction system according to embodiments of the present disclosure. Referring to FIG. 8, first and second user terminals 300-1 and 300-2 of two owners owner 1 and owner 2 participate in personal information transactions. The owner 1 has the attribute (30s, female, living in Busan), and owner 2 has the attribute (40s, male, living in Busan).

The transaction management server 100 provides a purchase suggestion indicating the owner attribute (30s, female, living in Busan) and the type of personal information (consumption amount). The purchase suggestion is directly or indirectly transmitted to the first and second user terminals 300-1 and 300-2.

Each of the first and second user terminals 300-1 and 300-2 refers to target owner information indicated by the purchase suggestion, and determines whether a relevant user (that is, an owner of the personal information) is a target user. For example, the first user terminal 300-1 determines that the owner 1 is the target user, and the second user terminal 300-2 determines that the owner 2 is not the target user.

The first and second user terminals 300-1 and 300-2 may transmit, that is, sell, personal information to purchasers depending on whether the user is the target user.

The first user terminal 300-1 may determine that the owner 1 is the target user, and may provide personal information of the owner 1 to the purchaser according to the determination result. For example, the first user terminal 300-1 may request the personal information management server 200 to transmit the personal information of the owner 1, and transmit, to a private storage of the purchaser, the personal information of the owner 1 transmitted from the personal information management server 200. On the other hand, the second user terminal 300-2 may determine that the owner 2 is not the target user and may provide no personal information of the owner 2 to the purchaser. In such a case, the second user terminal 300-2 does not request the personal information management server 200 to transmit the personal information of the owner 2.

According to embodiments of the present disclosure, purchasers who want to purchase personal information can eliminate the inconvenience of separately making suggestion and transaction for each owner, and can more conveniently trade a large amount of personal information of a plurality of owners.

According to embodiments of the present disclosure, a seller who does not directly own but manages personal information can participate in transactions for personal information of others (owners) managed by the seller, and acquire compensation in the participation process. In addition, since the personal information is directly transmitted from the owner to the purchaser, management responsibility for the transmission of the personal information can be reduced.

According to embodiments of the present disclosure, an owner of personal information can sell his or her personal information according to a purchase suggestion of a purchaser even though the owner does not directly suggest a transaction. In particular, since it is automatically determined whether the owner possesses personal information suitable for the purchase suggestion of the purchaser, there is an effect of confirming and proceeding only a personal information transaction valid for the owner.

The above description is merely a description of the technical spirit of the present disclosure, and those skilled in the art may change and modify the present disclosure in various ways without departing from the essential characteristic of the present disclosure. Accordingly, the embodiments described in the present disclosure should not be construed as limiting the technical spirit of the present disclosure, but should be construed as describing the technical spirit of the present disclosure. The technical spirit of the present disclosure is not restricted by the embodiments. The range of protection of the present disclosure should be construed based on the following claims, and all of technical spirits within an equivalent range of the present disclosure should be construed as being included in the scope of rights of the present disc.

The aforementioned device (unit) may be implemented as a hardware component and/or a software component. For example, the hardware component may include a microphone, an amplifier, a bandpass filter, an A/D converter, and a processing device. The processing device may be implemented by using one or more general-purpose computers or special-purpose computers, like a processor, a controller, an arithmetic logic unit (ALU), a digital signal processor, a microcomputer, a field programmable gate array (FPGA), a programmable logic unit (PLU), a microprocessor, or other devices capable of responding to an instruction and executing an instruction in a defined manner, for example. The processing device may operate an operating system (OS) and one or more software applications that operate on the OS. Furthermore, the processing device may access, store, manipulate, process, and generate data in response to the execution of software. For a brief description, the processing device may be described as being one, but a person having ordinary knowledge in the art may understand that the processing device may include a plurality of processing elements and/or a plurality of types of processing elements. For example, the processing device may include a plurality of processors or processors and controllers. Furthermore, other processing configurations, such as a parallel processor, are also possible.

Software may include a computer program, a code, an instruction, or a combination thereof, and may configure the processing device independently or collectively so that the processing device operates as desired or may instruct the processing device. Software and data may be embodied in the form of a propagated signal wave which may be interpreted by the processing device or may provide an instruction or data to the processing device or in various types of machines, a component, a physical device, virtual equipment, or a computer storage medium or device permanently or temporarily. The software may be distributed to computer systems connected over a network and may be stored or executed in a distributed manner. The software and data may be stored in one or more computer-readable recording media. The computer-readable recording media include a data storage device which stores data that may be subsequently read by a computer system or a processing device. The method according to the embodiment may be implemented in the form of a program instruction which may be performed through various computer means, and may be recorded on a computer-readable medium. Examples of the computer-readable recording medium include ROM, RAM, CD-ROM, a magnetic tape, a floppy disk, and an optical data storage device, and include magnetic media such as a hard disk, a floppy disk, and a magnetic tape, optical media such as CD-ROM and a DVD, magneto-optical media such as a floptical disk, and hardware devices specially configured to store and execute program instructions, such as ROM, RAM, and flash memory. Furthermore, a functional program, a code, and code segments that complete the examples disclosed herein may be easily understood and implemented by a programmer having ordinary knowledge in the technical field related to these examples based on the description provided herein or by using the description in relation to the flowcharts of the drawings and the block diagrams.

Although the terminal or the device described herein may not be generally applied, the terminal or the device may be applied to mobile devices, such as a cellular telephone, a PDA, a digital camera, a portable game console, an MP3 player, a portable/individual multimedia player (PMP), a portable e-book, a portable laptop PC, GPS navigation, a tablet, and a sensor, and a desktop PC, HDTV, an optical disk player, a set-top box, home appliances, and devices capable of wireless communication or network communication.

Furthermore, the computer-readable medium may include a program instruction, a data file, and a data structure alone or in combination. The program instruction recorded on the medium may be specially designed and constructed for the embodiments or may be known and available to those skilled in the computer software field. Examples of the program instruction include not only a machine code produced by a compiler, but a high-level language code capable of being executed by a computer through an interpreter, etc. The hardware device may be constructed as one or more software modules in order to perform an operation of the embodiment, and vice versa.

As described above, although several embodiments have been described, it is to be understood that the present disclosure may be modified in various ways. For example, proper results may be achieved although the above descriptions are performed in order different from that of the described method and/or the aforementioned components, such as the system, structure, device or apparatus, and circuit, are combined in a form different from that of the described method or replaced with or supplemented by other components or equivalents. Accordingly, other implementations fall within the scope of the claims.

## Claims

1. A personal information transaction system comprising:
a transaction management server configured to store a purchase suggestion for a target personal information product;
a personal information management server configured to store personal information of a user; and
a user terminal configured to receive the purchase suggestion, to request the personal information management server to transmit target personal information associated with the purchase suggestion, to receive the target personal information from the personal information management server, and to transmit the received target personal information to an exterior of the user terminal.

2. The personal information transaction system of claim 1, wherein the purchase suggestion comprises target owner information associated with the purchase suggestion and indicating a target owner, and
the user terminal compares the target owner information with information on the user and determines whether the user is associated with the target owner, and
when the user is associated with the target owner, the user terminal requests the personal information management server to transmit personal information associated with the purchase suggestion.

3. The personal information transaction system of claim 1, wherein the purchase suggestion comprises target attribute information associated with the target personal information product and indicating target personal information, and
the user terminal requests the personal information management server to transmit target personal information associated with the target attribute information.

4. The personal information transaction system of claim 1, further comprising:
a transaction server,
wherein the transaction server receives the purchase suggestion from the transaction management server, and transmits the received purchase suggestion to the user terminal.

5. The personal information transaction system of claim 1, wherein the user terminal transmits personal information associated with the purchase suggestion to a storage of a purchaser, and the personal information management server does not transmit the personal information associated with the purchase suggestion to the storage of the purchaser.

6. The personal information transaction system of claim 4, wherein the purchase suggestion comprises a service ID for identifying the target personal information product,
the user terminal transmits a purchase suggestion request including an application ID for identifying an application executed in the user terminal to the transaction server, and
in response to the purchase suggestion request, the transaction server determines a service ID associated with the application ID by using application ID, and transmits a purchase suggestion associated with the determined service ID to the user terminal.

7. The personal information transaction system of claim 6, wherein the transaction server stores mapping information indicating information on the service ID and at least one application ID associated with the service ID, and
determines a service ID associated with the application ID transmitted from the user terminal by using the mapping information

8. An operating method of an electronic device for making a personal information transaction, the operating method comprising:
receiving a purchase suggestion for a target personal information product;
requesting a personal information management server to transmit target personal information associated with the purchase suggestion;
receiving the target personal information from the personal information management server and storing the received target personal information in the electronic device; and
transmitting the stored target personal information to the personal information management server and a storage of another purchaser.

9. The operating method of claim 8, wherein the purchase suggestion comprises target owner information associated with the purchase suggestion and indicating a target owner, and
the requesting of the target personal information associated with the purchase suggestion comprises:
comparing the owner information with information on a user stored in the electronic device and determining whether the user is associated with the target owner, and
when the user is associated with the target owner, requesting the personal information management server to transmit personal information associated with the purchase suggestion.

10. The operating method of claim 8, wherein the purchase suggestion comprises target attribute information associated with the target personal information product and indicating the target personal information, and
the requesting of the target personal information associated with the purchase suggestion comprises:
requesting the personal information management server to transmit target personal information associated with the target attribute information.

11. The operating method of claim 8, further comprising:
executing an application stored in the electronic device and an SDK linked to the application;
receiving the purchase suggestion from a transaction server by using the SDK; and
requesting the transaction server to transmit the target personal information by using the application.

12. The operating method of claim 11, wherein the purchase suggestion comprises target owner information associated with the purchase suggestion and indicating a target owner, and
the operating method further comprises:
receiving the purchase suggestion including the owner information from the transaction server by using the SDK;
comparing information on a user stored in the electronic device with the owner information by using the application and determining whether the user is associated with the target owner; and
when the user is associated with the target owner, requesting the personal information management server to transmit personal information associated with the purchase suggestion by using the SDK.

13. The operating method of claim 11, further comprising:
transmitting a purchase suggestion request including an application ID for identifying the application to the transaction server by using the SDK; and
receiving a purchase suggestion associated with the application ID from the transaction server.

14. The operating method of claim 13, further comprising:
registering the application ID for identifying the application in the SDK by using the application.
